(19) Europäisches Patentamt
European Patent Office
Office européen des brevets

(11) Publication number: 0 001 655
A2

# (12) EUROPEAN PATENT APPLICATION

(21) Application number: 78200229.9

(22) Date of filing: 06.10.78

(51) Int. Cl.[2]: A 01 N 5/00
C 07 C 121/84, C 07 C 121/44

(30) Priority: 17.10.77 GB 43081 77

(43) Date of publication of application:
02.05.79 Bulletin 79/9

(84) Designated contracting states:
CH DE FR GB NL

(71) Applicant: SHELL INTERNATIONALE RESEARCH MAATSCHAPPIJ B.V.
Carel van Bylandtlaan 30
NL-2596 HR DEN HAAG(NL)

(72) Inventor: Whitaker, Kenneth Edward
11 Kilm Close Challock
Nr. Ashford Kent(GB)

(72) Inventor: Hopwood, William John
48 Brier Road Borden
Sittingbourne Kent(GB)

(72) Inventor: Haddock, Ernest
181 Queenborough Road
Sheerness Kent(GB)

(74) Representative: Keuzenkamp, Abraham et al,
P.O. Box 302
NL-2501 CH Den Haag(NL)

## (54) Compositions comprising as active ingredients cyanobenzyl(idene)-aniline derivatives, the use of the compositions as plant growth regulants and a method for the preparation of the active ingredients.

(57) Plant growth regulant compositions comprising as active ingredient a cyanobenzyl(idene) aniline derivative of the following general formula:-

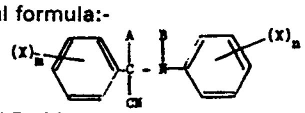

wherein A and B either represent hydrogen atoms or jointly represent a C-N covalent bond, each of the substituents X which may be mutually the same or different individually represents a halogen atom, an optionally halogenated alkyl group, an alkoxy or alkanoyl group, or a nitro or carboxyl group and m and n each independently represent 0, 1, 2, 3 or 4. The use of the compositions as plant growth regulants and method for the preparation of the active ingredients.

EP 0 001 655 A2

Croydon Printing Company Ltd.

COMPOSITIONS COMPRISING AS ACTIVE INGREDIENTS CYANO-BENZYL(IDENE) ANILINE DERIVATIVES, THE USE OF THE COMPOSITIONS AS PLANT GROWTH REGULANTS AND A METHOD FOR THE PREPARATION OF THE ACTIVE INGREDIENTS

This invention relates to compositions possessing plant growth regulant activity comprising certain benzaniline derivatives as active ingredient.

In the literature a few cyanobenzylidenes have been described, but no mention has been made concerning their possible biological activity (cf. J. Org. Chem. (1967), pp. 1165-1168).

It has been found that a particular group of cyanobenzyl-anilines and cyanobenzylideneanilines, have properties making them suitable to be applied as active ingredients of plant growth regulating compositions.

Accordingly, the present invention provides a plant growth regulant composition comprising, as active ingredient, a cyanobenzyl(idene)aniline derivative of the following general formula:

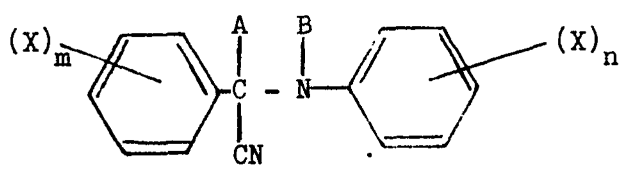

I

wherein A and B either represent hydrogen atoms or jointly represent a C-N covalent bond; each of the substituents X, which may be mutually the same or different, individually represents a halogen atom, an optionally halogenated alkyl

group, an alkoxy or alkanoyl group, or a nitro or carboxyl group; and m and n each individually represent 0, 1, 2, 3 or 4.

Preferably the active ingredient is a cyanobenzyl(idene) aniline derivative of formula I in which m represents zero and n represents 1, 2 or 3, also preferred are derivatives in which X represents a halogen atom, particularly a fluorine, chlorine or bromine atom. In addition derivatives of formula I are preferred in which X represents an alkyl group of 1 to 6 carbon atoms optionally halogenated by, for example, one or more fluorine or chlorine atoms, suitably methyl or trifluoromethyl, an alkoxy or alkanoyl group in which the alkyl moiety contains 1 to 6 carbon atoms, suitably methoxy or acetyl, or a nitro or carboxyl group.

A number of the cyanobenzyl(idene) aniline derivatives that may be used as active ingredients in the compositions of this invention are believed to be novel compounds, and as such form a further feature of this invention. Thus, the invention comprises also novel alpha cyanobenzyl(idene) aniline derivatives of the formula I set out above, wherein A, B, X, m and n each have the meanings defined above in relation to formula I, provided that when A and B together jointly represent a C-N covalent bond then at least one of the substituents X is a halogen atom. These novel alpha cyanobenzyl(idene) anilines may be prepared by suitable adaptations of standard organic synthetic procedures, illustrations of which are contained in the Examples below.

Preferred cyanobenzyl(idene) aniline derivatives according to the invention include:

N-alpha-cyanobenzyl-3,4-dichloroaniline;
N-alpha-cyanobenzyl-4-bromoaniline;
N-alpha-cyanobenzyl-3-chloro-4-fluoroaniline;
N-alpha-cyanobenzylidene-4-bromoaniline and
N-alpha-cyanobenzylidene-3,4-dichloroaniline.

The cyanobenzyl(idene) aniline-containing compositions

of this invention exhibit a number of useful plant growth regulant properties, including the enhancement of yield in certain crops, and in particular in the case of bean plants, such as soya bean, increasing the number of bean pods per plant and also the yield of seeds per plant. The invention therefore includes, in a further embodiment, a method of influencing the growth of plants at a locus, which comprises applying to the locus a biologically effective amount of a composition according to the invention. Suitably the composition is applied to the locus by spraying an amount providing an application rate of active ingredient between 0.1 and 10 kg/ha, and, as indicated above, it is particularly effective in increasing yields when applied to soya bean. It is normal agrochemical practice to include in plant growth regulant compositions a carrier or a surface-active agent, or both a carrier and a surface-active agent, and accordingly the compositions according to the present invention preferably include such an ingredient or ingredients.

The term 'carrier' as used herein means a material, which may be inorganic or organic and of synthetic or natural origin, with which the active compound is mixed or formulated to facilitate its application to the plant, seed, soil or other object to be treated, or its storage, transport or handling. The carrier may be a solid or a fluid. Any of the material usually applied in formulating agrochemicals may be used as carrier.

Suitable solid carriers are natural and synthetic clays and silicates for example natural silicas such as diatomaceous earths; magnesium silicates, for example, talcs; magnesium aluminium silicates, for example, kaolinites, montmorillinites and micas; calcium carbonates; calcium sulphate; synthetic hydrated silicon oxides and synthetic calcium or aluminium silicates; elements such as for example, carbon and sulphur; natural and synthetic resins such as for example, coumarone resins, polyvinyl chloride and styrene polymers and copolymers; solid polychlorophenols; bitumen;

waxes such as for example, beeswax, paraffin wax, and chlorinated mineral waxes; and solid fertilisers, for example superphosphates.

Examples of suitable fluid carriers are water; alcohols, such as for example, isopropanol; glycols; ketones such as for example, acetone, methyl ethyl ketone, methyl isobutyl ketone and cyclohexanone; ethers; aromatic hydrocarbons, such as for example, benzene toluene and xylene; petroleum fractions such as for example, kerosine, light mineral oils; chlorinated hydrocarbons, such as for example, carbon tetrachloride, perchloroethylene, trichloroethane, including liquefied normally vaporous gaseous compounds. Mixtures of different liquids are often suitable.

The surface-active agent may be an emulsifying agent or a dispersing agent or a wetting agent; it may be nonionic or ionic. Any of the surface-active agents usually applied in formulating agrochemicals may be used. Examples of suitable surface-active agents are the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohols or alkyl phenols, for example p-octylphenol or p-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example, sodium lauryl sulphate, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and propylene oxide.

The compositions of the invention may be formulated as wettable powders, dusts, granules, solutions, emulsifiable concentrates, emulsions, suspension concentrates or aerosols, and will generally contain 0.5 to 95% w, preferably 0.5 to 75% w, of active ingredient. Wettable powders are usually compounded to contain 25, 50 or 75% w, of active ingredient and usually contain, in addition to solid carrier, 3-10% w of a dispersing agent and, where necessarry, 0-10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing ½-10% w of active ingredient. Granules are usually prepared to have a size between 10 and 100 BS mesh, and may be manufactured by agglomeration or impregnation techniques. Generally granules will contain ½-25% w active ingredient and 0-10% w of additives such as stabilisers, slow release modifiers and binding agents. Emulsifiable concentrates usually contain, in addition to the solvent and, when necessary, co-solvent, 10-50% w/v active ingredient, 2-20% w/v emulsifiers and 0-20% w/v of appropriate additives such as stabilisers, penetrants and corrosion inhibitors. Suspension concentrates are compounded so as to obtain a stable, non-sedimenting, flowable product and usually contain 1-75% w active ingredient, 0.5-15% w of dispersing agents, 0.1-10% w of suspending agents such as protective colloids and thixotropic agents, 0-10% w of appropriate additives such as defoamers, corrosion inhibitors, stabilisers, penetrants and stickers, and as carrier, water or an organic liquid in which the active ingredient is substantially insoluble; certain organic solids or inorganic salts may be dissolved in the carrier to assist in preventing sedimentation or as anti-freeze agents for water.

The compositions of the invention may contain other ingredients, for example, protective colloids such as gelatin,

glue, casein, gum, cellulose ethers, and polyvinyl alcohol; thixotropic agents, e.g. bentonites, sodium polyphosphates; stabilisers such as ethylene diamine tetra-acetic acid, urea, triphenyl phosphate; other agrochemicals; and stickers, for example, non-volatile oils.

Aqueous dispersions and emulsions, for example, compositions obtained by diluting a wettable powder or an emulsifiable concentrate according to the invention with water, also lie within the scope of the present invention. The said emulsions may be of the water-in-oil or of the oil-in-water type, and may have a thick 'mayonnaise'-like consistency.

The invention is further illustrated by reference to the following Examples.

Example I N-alpha cyanobenzyl-3,4-dichloroaniline

(a) Preparation of 3,4 dichloro-N-benzylidene aniline

3,4 dichloro aniline (16.2 g, 0.1 mole) and benzaldehyde (10.6 g, 0.1 mole) were refluxed together in benzene (150 ml) under a Dean and Stark trap until no more water came over. The benzene was then evaporated and the residue recrystallised from methanol to yield the desired intermediate, m. pt 55-57°C

Analysis Calc. for $C_{13}H_9NCl_2$ C 62.4; H 3.6; N 5.6%
Found C 62.7; H 3.7; N 5.5%

(b) Preparation of N-alpha-cyanobenzyl-3,4-dichloro aniline

3,4-dichloro-N-benzylidene aniline (5 g, 0.2 mole; prepared as above) potassium cyanide (1.3 g, 0.2 mole) and glacial acetic acid (1.2 g, 0.2 mole) were refluxed gently in ethanol (200 ml) for 3 hours. The solvent was then evaporated and the residue dissolved in methylene chloride. The organic solution was then washed with water, dried over magnesium sulphate and evaporated. The solid remaining was recrystallised from methanol to yield the desired product; m. pt. 96-100°C

Analysis Calc. for $C_{14}H_{10}N_2Cl_2$ C 60.6; H 3.6; N 10.1%
Found C 60.9; H 3.6; N 9.6%

Examples II-XIII'

Following procedures similar to those described in Example I, further compounds were prepared whose physical characteristics and analyses are set out in Table 1. The compounds are identified by reference to the substituents X in the following formula:-

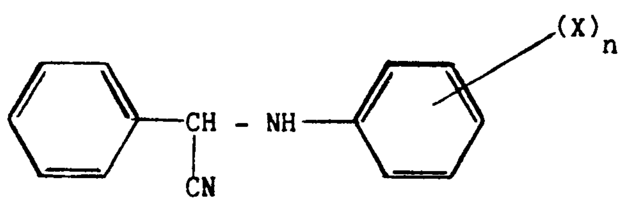

TABLE 1

| Ex.No. | $(X)_n$ | M.Pt. °C | Analysis: Calc. for | | Found |
|---|---|---|---|---|---|
| II | 3,5-$Cl_2$ | 122-124 | $C_{14}H_{10}N_2Cl_2$ | C 60.6; H 3.6 | C 60.9; H 3.5 |
| III | 4-Br. | 85-87 | $C_{14}H_{11}N_2Br$ | C 58.5; H 3.8 | C 58.4; H 3.8 |
| IV | 3 Br. | 85-87 | $C_{14}H_{11}N_2Br$ | C 58.5; H 3.8 | C 58.4; H 3.9 |
| V | 4 F | 79-81 | $C_{14}H_{11}N_2F$ | C 74.3; H 4.9 | C 75.0; H 5.0 |
| VI | 3-Cl, 4-F | 101-103 | $C_{14}H_{10}N_2FCl$ | C 64.5; H 3.8 | C 64.6; H 3.9 |
| VII | 3-$CF_3$ | 88-90 | $C_{15}H_{11}N_2F_3$ | C 65.2; H 4.0 | C 65.0; H 4.2 |
| VIII | 2,5-$(CH_3)_2$ | 103-105 | $C_{16}H_{16}N_2$ | C 81.3; H 6.8 | C 81.3; H 6.9 |
| IX | 2-$CH_3$,5-Cl | 50-55 | $C_{15}H_{13}N_2Cl$ | C 70.2; H 5.1 | C 70.3; H 5.5 |
| X | 3-$NO_2$,4-$CH_3$ | 75-80 | $C_{15}H_{13}N_3O_2$ | C 67.4; H 4.9 | C 68.4; H 5.1 |
| XI | 2-Cl, 4-$CH_3O$ | 88-91 | $C_{15}H_{13}N_2OCl$ | C 66.1; H 4.7 | C 66.2; H 4.7 |
| XII | 3-$CH_3CO$,5-Cl | 66-69 | $C_{16}H_{13}N_2OCl$ | C 76.8; H 5.6 | C 77.5; H 5.6 |
| XIII | 2-COOH | 162-164 | $C_{15}H_{12}N_2O_2$ | C 71.4; H 4.8 | C 71.5; H 4.8 |
| XIII' | 4-Cl | 75-77 | $C_{14}H_{11}N_2Cl$ | C 69.3; H 4.[illegible] N 11.[illegible] | C 69.4; H [illegible] N 11.[illegible] |

Example XIV N-alpha cyanobenzylidene-3,4-dichloroaniline

N-alpha-cyanobenzyl 3,4-dichloro-aniline (1 g, .0036 mole prepared as in Example I) and active manganese dioxide ( 2 g, .023 mole) were stirred together in benzene (50 ml) for 24 hours. The solution was then filtered and the solvent evaporated. The solid remaining was recrystallised from methanol - water to yield the desired product m.pt. 103-104°C

Analysis Calc. for $C_{14}H_8N_2Cl_2$ C 61.1; H 2.9; N 10.2%
Found C 61.5; H 2.9; N 10.1%

Examples XV-XXVI

Following procedures similar to those described in Example XIV, further compounds were prepared whose physical characteristics and analyses are set out in Table 2. The compounds are identified by reference to the substituents X in the following formula:-

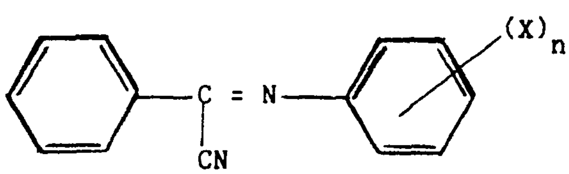

TABLE 2

| Ex. No. | $(X)_n$ | M.Pt. °C | Analysis: Calc.for | | Found |
|---|---|---|---|---|---|
| XV | $3,5-Cl_2$ | 105-107 | $C_{14}H_8N_2Cl_2$ | C 61.0; H 2.9 | C 61.3; H 2.9 |
| XVI | 4-Br | 111-114 | $C_{14}H_9N_2Br$ | C 59.0; H 3.2 | C 58.2; H 3.0 |
| XVII | 3-Br | 75-77 | $C_{14}H_9N_2Br$ | C 59.0; H 3.2 | C 59.3; H 3.1 |
| XVIII | 4-F | 103-105 | $C_{14}H_9N_2F$ | C 75.0; H 4.0 | C 75.1; H 3.9 |
| XIX | 3-Cl,4-F | 77-79 | $C_{14}H_8N_2FCl$ | C 65.0; H 3.1 | C 65.2; H 2.8 |
| XX | $3-CF_3$ | (oil) | $C_{15}H_9N_2F_3$ | C 65.7; H 3.3 | C 66.6; H 3.6 |
| XXI | $2,5-(CH_3)_2$ | 83-85 | $C_{16}H_{14}N_2$ | C 82.0; H 6.0 | C 81.6; H 6.4 |
| XXII | $2-CH_3,5-Cl$ | 101-103 | $C_{15}H_{11}N_2Cl$ | C 70.7; H 4.3 | C 70.4; H 4.3 |
| XXIII | $3-NO_2,4-CH_3$ | 113-116 | $C_{15}H_{11}N_3O_2$ | C 67.9; H 4.2 | C 67.1; H 4.3 |
| XXIV | $2-Cl,4-CH_3O$ | 111-114 | $C_{15}H_{11}N_2OCl$ | C 66.5; H 4.1 | C 66.8; H 4.5 |
| XXV | $3-CH_3CO,5-Cl$ | 73-75 | $C_{16}H_{11}N_2OCl$ | C 77.4; H 4.8 | C 77.6; H 4.7 |
| XXVI | 4-Cl | 80-82 | $C_{14}H_9N_2Cl$ | C 69.9; H 3.7<br>N 11.6 | C 69.7; H 3.7<br>N 11.5 |

Example XXVII Plant Growth Regulant Activity

1. SOYABEAN

(i) Primary. Soyabean (Glycine max cv. Amsoy) were grown singly in 5" diam. pots in a loam: grit mixture (5:1). The seeds, prior to sowing, were inoculated with a commercial strain of Rhizobium to induce nodulation. ("Nitrogerm" from Root Nodule Pty. Ltd., Australia). Technical chemical materials were dissolved in acetone containing 0.4% Triton X155 (an alkylarylpolyetheralcohol) and made up to volume with distilled water to give a final acetone concentration of 40%. Plants were sprayed with this acetone formulation at flowering, approximately 4-5 weeks after sowing. All treatments were as foliar applications to three replicates at each dose corresponding to 0.5, 2 and 5 kg/ha using a fixed "fan" nozzle sprayer which delivered 632 l/ha. After treatments, plants were set out in a randomised block and maintained with sub-irrigation for the test period. Height (cm), phytotoxicity and any other physiological effects were recorded one week after treatment. Three weeks later the total pod number per plant was recorded. Results were de-randomised and mean values of the three replicates calculated.

(ii) Secondary. Screening procedure as for primary except:-

(a) Plants grown in 7" diam pots

(b) 8 replicates per treatment

(c) Plants allowed to reach maturity and then total pod number, seed number and seed freshweight per plant recorded.

2. Abscission Agents

French bean (cv. Canadian Wonder) were grown two per monopot (3" diam.) for two weeks. At the appearance of

the first trifoliate leaf the lamina of the primary leaves were removed 48 hours prior to treatment.
Technical chemical material was dissolved in acetone containing 0.4% Triton X155 and made up to volume with distilled water to give a final acetone concentration of 10%.
All treatments were as foliar applications to three replicates at each dose of 250, 500, 1000 and 2000 ppm, using a fixed "fan" nozzle to spray to run off. After treatment plants were set out in a randomised block and maintained with sub-irrigation at 65°F for the test period.
At one and two weeks after treatment the number of de-laminated petioles which had abscissed was recorded, as was any phytotoxicity.

The results of the soya bean tests are set out in Table 3 below. The test compounds are identified by reference to the example in which they are characterised, and the results are all expressed in terms of the percentage value based on the value obtained from a control experiment, the latter value being put equal to 100.

The results of the abscission tests are set out in Table 4 below, in which the test compounds are indentified as for Table 3 and the results are expressed on a 0-4 scale in which 0 = complete abscission and 4 = no abscission.

TABLE 3

| Compound of Example No. | Appl. Rate KG/HA | Height | Pod No. | Seed Wt. (Yield) |
|---|---|---|---|---|
| XIV | 0.5 | 112 | 122 | 112 |
| | 2 | 121 | 114 | 102 |
| | 5 | 114 | 136 | 123 |
| XVI | 0.5 | 97 | 138 | - |
| | 2 | 76 | 115 | - |
| | 5 | 83 | 162 | - |
| XVIII | 0.5 | 118 | 115 | - |
| | 2 | 104 | 108 | - |
| | 5 | 102 | 118 | - |
| XXIII | 0.5 | 88 | 131 | - |
| | 2 | 103 | 146 | - |
| | 5 | 88 | 92 | - |
| XX | 0.5 | - | 122 | - |
| | 2 | - | 133 | - |
| | 5 | - | 133 | - |
| I | 0.5 | 100 | 120 | 124 |
| | 2 | 96 | 104 | 115 |
| | 5 | 99 | 114 | 103 |
| III | 0.5 | 95 | 161 | - |
| | 2 | 78 | 153 | - |
| | 5 | 72 | 138 | - |
| IV | 0.5 | 86 | 146 | - |
| | 2 | 81 | 153 | - |
| | 5 | 77 | 146 | - |

| Compound of Example No. | Appl. Rate KG/HA | Height | Pod No. | Seed Wt. (Yield) |
|---|---|---|---|---|
| VI | 0.5 | 118 | 135 | - |
| | 2 | 122 | 112 | - |
| | 5 | 114 | 125 | - |
| IX | 0.5 | 97 | 130 | - |
| | 2 | 37 | 130 | - |
| | 5 | 64 | 133 | - |
| X | 0.5 | 76 | 115 | - |
| | 2 | 88 | 130 | - |
| | 5 | 90 | 146 | - |
| XI | 0.5 | 92 | 130 | - |
| | 2 | 90 | 130 | - |
| | 5 | 84 | 100 | - |
| XII | 0.5 | 90 | 115 | - |
| | 2 | 90 | 154 | - |
| | 5 | 90 | 130 | - |
| V | 0.5 | 100 | 119 | 119 |
| | 2 | 95 | 138 | 121 |
| | 5 | 92 | 129 | 101 |

TABLE 4

| Compound of Example No. | ppm | Abscission |
|---|---|---|
| III | 50 | 1 |
| | 250 | 2 |
| | 1000 | 0 |
| | 2000 | 0 |
| XI | 50 | 1 |
| | 250 | 1 |
| | 1000 | 1 |
| | 2000 | 2 |
| IX | 50 | 1 |
| | 250 | 0 |
| | 1000 | 1 |
| | 2000 | 1 |
| XIV | 50 | 1 |
| | 250 | 2 |
| | 1000 | 0 |
| | 2000 | 1 |
| CONTROL | - | 3 |

0001655



C L A I M S

1. A plant growth regulant composition comprising as active ingredient a cyanobenzyl(idene) aniline derivative of the following general formula:-

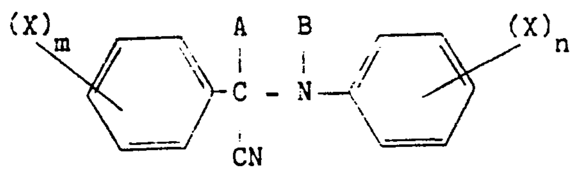

I

wherein A and B either represent hydrogen atoms or jointly represent a C-N covalent bond, each of the substituents X which may be mutually the same or different individually represents a halogen atom, an optionally halogenated alkyl group, an alkoxy or alkanoyl group, or a nitro or carboxyl group and m and n each independently represent 0, 1, 2, 3 or 4.

2. A composition according to claim 1, characterized in that in the cyanobenzyl(idene)aniline derivative of formula I m represents zero, and n represents 1 or 2.

3. A composition according to claim 1 or 2, characterized in that in the cyanobenzyl(idene)aniline derivative of formula I X represents a halogen atom, an optionally halogenated alkylgroup of 1 to 6 carbon atoms or an alkoxy or alkanoylgroup in which the alkyl moiety contains 1 to 6 carbon atoms.

4. Alpha-cyanobenzyl(idene)aniline derivatives of the formula I wherein A, B, X, m and n have the same meaning as

defined in claim 1 with the proviso that when A and B jointly represent a C-N covalent bond, at least one of the substituents X is a halogen atom.

5. N-alpha cyanobenzyl-3,4 dichloroaniline.

6. N-alpha cyanobenzyl-4-bromoaniline.

7. N-alpha cyanobenzyl-3-chloro-4-fluoroaniline.

8. N-alpha cyanobenzylidene-4-bromoaniline.

9. N-alpha cyanobenzylidene-3,4-dichloroaniline.

10. A process for the preparation of cyanobenzyl(idene) aniline derivatives of the formula I wherein A, B, X, m and n have the same meaning as defined in claim 1, characterized in that a benzaldehyde of formula

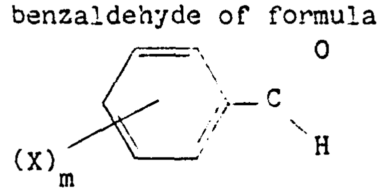

II

is reacted with an aniline of formula

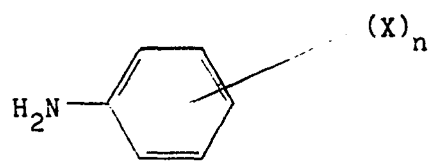

III

and the formed benzylidene intermediate product is subsequently contacted with a cyanide.

11. A method of modifying the growth of plants at a locus, in which to the locus a biologically effective amount of a composition according to any of claims 1-3 is applied.